Europäisches Patentamt

European Patent Office

Office européen des brevets

(11) Veröffentlichungsnummer: **0 096 409**
**B1**

(12) **EUROPÄISCHE PATENTSCHRIFT**

(45) Veröffentlichungstag der Patentschrift: **18.02.87**

(51) Int. Cl.⁴: **H 04 Q 11/04**

(21) Anmeldenummer: **83105549.6**

(22) Anmeldetag: **06.06.83**

(54) Digitales Fernsprechendgerät, insbesondere Fernsprechapparat.

(30) Priorität: **05.06.82 DE 3221387**

(43) Veröffentlichungstag der Anmeldung:
**21.12.83 Patentblatt 83/51**

(45) Bekanntmachung des Hinweises auf die
Patenterteilung:
**18.02.87 Patentblatt 87/08**

(84) Benannte Vertragsstaaten:
**AT BE CH DE FR GB IT LI LU NL SE**

(56) Entgegenhaltungen:
**EP-A-0 036 622**
**DE-A-2 828 583**
**GB-A-2 066 023**
**US-A-4 232 293**

(73) Patentinhaber: **KRONE Aktiengesellschaft**
**Beeskowdamm 3-11**
**D-1000 Berlin 37 (DE)**

(72) Erfinder: **Weber, Jens, Dr.**
**Im Dol 33**
**D-1000 Berlin 33 (DE)**
Erfinder: **Ramin, Horst, Dr.**
**Schulstrasse 19**
**D-1000 Berlin 65 (DE)**

(74) Vertreter: **Patentanwälte Beetz sen. - Beetz jun.**
**Timpe - Siegfried - Schmitt-Fumian**
**Steinsdorfstrasse 10**
**D-8000 München 22 (DE)**

Courier Press, Leamington Spa, England.

**Beschreibung**

Die Erfindung betrifft ein digitales Fernsprechendgerät und insbesondere einen Fernsprechapparat mit einer digitalen Schnittstelle für den Anschluß an ein digitales Fernsprechnetz.

In EP—A—0036622 ist ein digitales Nachrichtenübermittlungssystem beschrieben, bei dem auch an die Einbeziehung bestehender Vermittlungseinrichtungen innerhalb des Fernsprechnetzes gedacht ist, die noch auf die bisherige Analogtechnik ausgelegt sind. In diesem Zusammenhang wird die Verwendung geeigneter Anpassungseinrichtungen erwähnt, die unter anderem für eine D/A- und A/D-Wandlung und eine Signalisierungsanpassung sorgen müssen. Die Verwendung von Fernsprechapparaten in der bisherigen Technik und von deren herkömmlichen Zusatzeinrichtungen ist dagegen nicht vorgesehen. Der sich gegenwärtig in der Fernmeldetechnik vollziehende Wandel mit dem Ziel einer Digitalisierung der Fernmeldenetze beruht im wesentlichen auf dem technologischen Fortschritt bei groß integrierten Halbleiterschaltungen, in der Mikrorechnertechnik und in der optischen Nachrichtentechnik. Der damit verbundene Vorteil liegt im wesentlichen innerhalb des Fernsprechnetzes selbst, während für den angeschlossenen Teilnehmer vor allem ein gesteigertes Informationsangebot anfällt.

Rückwirkungen für den einzelnen Teilnehmeranschluß ergeben sich insofern zunächst nur durch die Forderung nach Verwendung eines digitalen Fernsprechendgerätes, während die sonstigen Teilnehmereinrichtungen nicht unmittelbar betroffen sind. Insbesondere für die Zeit der Umrüstung der bestehenden analogen Fernsprechnetze auf digitale Ausführungen besteht daher ein starkes Bedürfnis, in Verbindung mit dem umgerüsteten Netz auch analoge Zusatzgeräte betreiben zu können, da diese beim Teilnehmer bereits vorhanden sind und einen erheblichen Investitionswert darstellen, und da außerdem digitale, direkt anschließbare Zusatzgeräte zum einen in absehbarer Zukunft noch nicht zur Verfügung stehen und zum anderen nur sukzessiv die analogen Zusatzeinrichtungen verdrängen können.

Der Erfindung liegt daher die Aufgabe zugrunde, im Rahmen des Betriebs eines digitalen Fernsprechendgerätes die Möglichkeit für einen Anschluß von herkömmlichen analogen Zusatzgeräten zu schaffen.

Diese Aufgabe wird gemäß der Erfindung gelöst durch eine Ausbildung des digitalen Fernsprechendgeräts, wie sie im Patentanspruch 1 gekennzeichnet ist. Dabei ergeben sich vorteilhafte Weiterbildungen der Erfindung aus den Unteransprüchen.

Erfindungsgemäß wird innerhalb des digitalen Fernsprechendgerätes die digitale Schnittstelle, z. B. eine ISDN-Schnittstelle, für eine Übertragung und Vermittlung digitaler Signale verschiedener Dienste, z. B. des Fernsprech- und des Datendienstes, in denselben Einrichtungen auf eine analoge a,b-Schnittstelle umgesetzt. Diese Ausführung stellt eine Übergangslösung bis zur vollständigen Umrüstung auf digitale Zusatzgeräte dar.

Die Erfindung soll nun anhand der Zeichnung näher erläutert werden; dabei zeigen in der Zeichnung;

Fig. 1 den grundsätzlichen Aufbau eines herkömmlichen analogen Fernsprechapparats in einem Blockschaltbild;

Fig. 2 den möglichen Aufbau eines entsprechenden digitalen Fernsprechapparats wiederum in Form eines Blockschaltbilds; und

Fig. 3 ein bevorzugtes Ausführungsbeispiel für die vorliegende Erfindung.

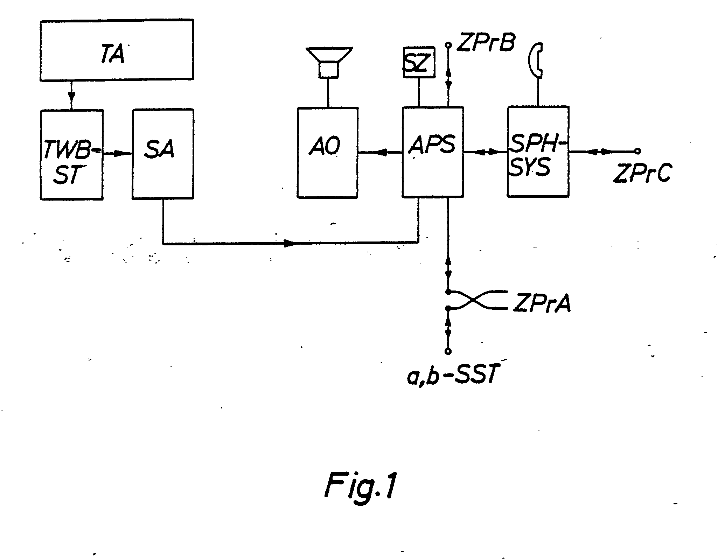

Fig. 1 zeigt ein vereinfachtes Blockschaltbild eines analogen Fernsprechapparates. Dieser besteht im wesentlichen aus den Baugruppen eines Tastenwahlblockes TA, TWB—ST, SA sowie aus einem Anruforgan AO, einer Apparateschaltung APS und einem Sprech- und Hörsystem SPH—SYS.

Weiterhin sind in Fig. 1 die Anschlußmöglichkeiten für Zusatzeinrichtungen ZPrA,ZPrB,ZPrC angedeutet Schaltungstechnisch wird die ZPrA vor und die ZPrB hinter dem analogen Fernsprechteil an die analoge a,b-Schnittstelle geschaltet. Die künftige Anschlußtechnik der Deutschen Bundespost sieht vor, die ZPr B wie eine ZPr A anzuschließen. Dies bedingt schaltungstechnische Maßnahmen in den neu zu entwickelnden Zusatzeinrichtungen.

Von den in Frage kommenden Zusatzeinrichtungen seien im folgenden einmal die wichtigsten exemplarisch aufgeführt:

Zweite Sprechapparate,

zweite Hörer,

Gebührenanzeiger,

Anschaltrelais zur Anrufkennzeichnung,

Einrichtungen zur Übertragung von Daten,

Einrichtungen zum Zwecke des Warn- und Alarmdienstes,

Rufnummerngeber,

Lauthörgeräte,

Freisprecheinrichtungen,

automatische Anrufbeantworter,

automatische Auskunftgeber,

Geräte zur Aufzeichnung von Gesprächen.

Die Durchführung von Ferngesprächen erfolgt bekanntermaßen in den drei Phasen Verbindungsaufbau, Gespräch, Verbindungsabbau. Während im Gesprächszustand im wesentlichen eine bidirektionale Übertragung der Sprachinformation stattfindet, ist neben der Speisung des Fernsprechapparates durch die Vermittlungsstelle VSt zur funktionalen Abwicklung des Auf- und Abbaus einer Verbindung die Erzeugung bzw. Übertragung folgender Systeminformationen erforderlich:

FeAp → VSt

* Handapparat aufgelegt, Handapparat abgehoben

* Wahlinformationen

VSt → FeAp
* Ruf
* Hörtöne (Wählton, Freiton, Besetztton)
* Gebühren

Diese Informationen werden im Fall des analogen Fernsprechapparates an der a,b-Schnittstelle (a,b-SST, vgl. Fig. 1) in Form von elektrischen analogen Signalen bzw. Signalzuständen übergeben. Die Daten dieser in der analogen Fernsprechtechnik verwendeten Signale (Pegel, Takt, Frequenz, Klirrfaktor, Toleranz etc.) sind bekannt.

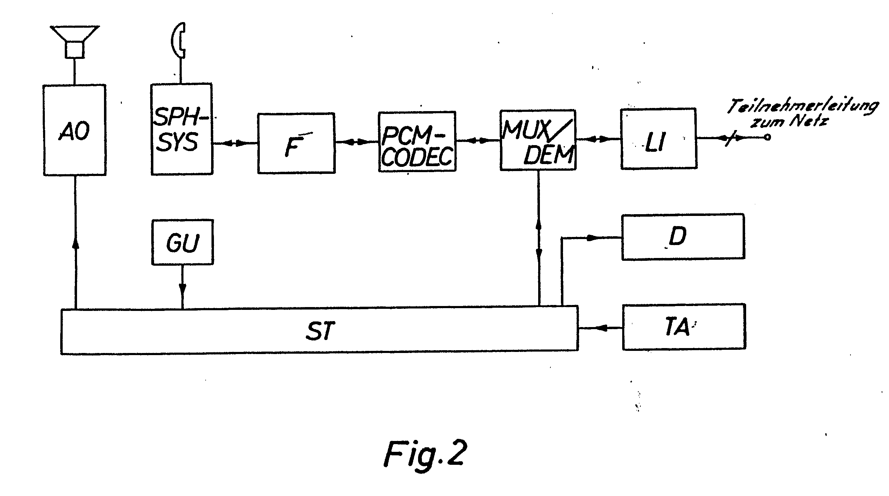

Fig. 2 zeigt das Blockschaltbild eines digitalen Fernsprechapparates. Der wesentliche Unterschied zum analogen FeAp besteht darin, daß sowohl die analogen Sprachsignale als auch die o. g. Systeminformationen digital verarbeitet und mit Hilfe eines digitalen Übertragungsverfahrens in codierter Form über die Teilnehmer-Anschlußleitung übermittelt werden.

Hauptsächliche Bestandteile des digitalen Fernsprechendgerätes FeAp DIG sind die je nach Umfang der Leistungsmerkmale durch einen oder mehrere Mikroprozessoren realisierte Steuerung und der intern vieradrig geführte Signalweg für die Sprachsignale, der aus einem Sprech- und Hörsystem SPH—SYS, einem Filter, einem PCM-Codec, einem Multiplexer/Demultiplexer MUX/DEM und einem Leitungsinterface LI besteht. Anruforgan AO, Gabelumschalter GU, Tastatur TA und Display D kommunizieren direkt mit der Steuerung ST, die über den Multiplexer/Demultiplexer MUX/DEM Zugriff zum Signalisierungskanal hat.

Das Leitungsinterface LI vollzieht generell eine digitale Zweidraht-Vierdrahtumsetzung der digitalen Zweidraht-Teilnehmeranschlußleitung in einen kommenden und gehenden digitalen Datenstrom und sorgt für Signalformung und Pegelanpassung. Je nach dem digitalen Übertragungsverfahren (Echokompensationsverfahren, Ping-Pong-Verfahren etc.) beinhaltet das Leitungsinterface LI noch weitere Funktionsbaugruppen, wie z. B. Scrambler/Descrambler, Coder/Decoder, Kompensator, Entzerrer etc.

Die digitale Schnittstelle des Leitungsinterface LI zu der als 2-adrige Cu—TlnAsl ausgeführten Teilnehmerleitung hin kann insbesondere auch als ISDN-Schnittstelle ausgebildet sein.

Die Ein- und Ausgabe der Sprache über elektroakustische Wandler mit Hilfe des Sprech- und Hörsystems SPH—SYS bleibt als analoger Vorgang auch beim digitalen Fernsprechendgerät FeAp DIG bestehen. Das dargestellte digitale Fernsprechendgerät FeAp DIG enthält aber keine Möglichkeit für den Anschluß von konventionellen analogen Zusatzeinrichtungen.

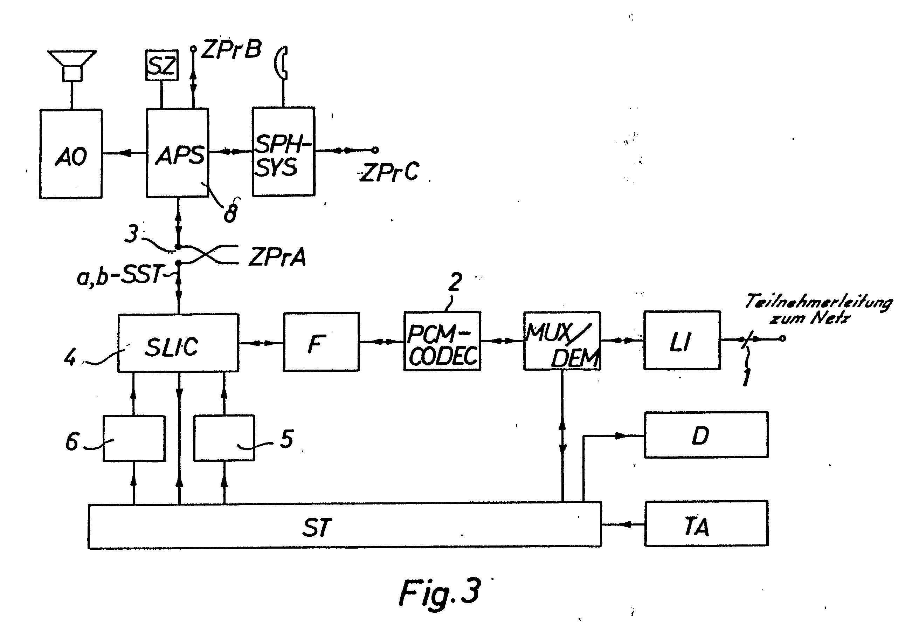

Erfindungsgemäß wird nun, ergänzend zu der ohnehin notwendigen Rückwandlung der digitalen Übertragungsdaten in analoge Sprachsignale, auch die analoge Signalerzeugung der Systeminformationen vorgenommen, so daß eine vollständige analoge a,b-Schnittstelle im obigen Sinne entsteht. Wie Fig. 3 zeigt, wird die Schaltung nach Fig. 2 um folgende Baugruppen erweitert.

4 = SLIC-Baustein
(SLIC ≙ Subscriber Line Interface Circuit)
5 = RUF-GEN
Ruf-Generator
6 = GEBI-GEN
Gebührenimpuls-Generator
8 = APS
Apparateschaltung

Die Schaffung einer völlig äquivalenten a,b-Schnittstelle ermöglicht zwei Anwendungsfälle:
A) Das Konzept eines digitalen Fernsprechapparates FeAp DIG, ausgehend von einer herkömmlichen analogen Fernsprechapparateschaltung und einer entsprechenden Ergänzungsschaltung (vgl. Fig. 1 und 3) alles im Gehäuse des FeAp DIG,
B) des Herausschleifen der a,b-Schnittstelle (vgl. Fig. 3), um z.B. über eine Anschlußdosenanlage bekannte analoge Zusatzeinrichtungen anzuschließen.

Der FeAp DIG ist mit seiner Ergänzungsschaltung über das Line-Interface (LI) digital mit dem entsprechenden Teilnehmeranschluß einer Vermittlungsstelle verbunden.

Es handelt sich also um einen digitalen Fernsprechapparat mit interner Umsetzung der digitalen Teilnehmerschnittstelle in einer herkömmliche analoge Schnittstelle und interner Nachschaltung eines analogen Fernsprechapparates.

Die schaltungstechnische Durchführung des beidseitig gerichteten Informationsaustausches zwischen analoger Fernsprechapparateschaltung und Ergänzungsschaltung wird im wesentlichen von dem SLIC-Baustein (4) übernommen (wie Fig. 3 zeigt).

Dieser hat innerhalb des FeAp DIG folgende Aufgaben:
1.) Speisung der Sprechschaltung (SPH—SYS)
2.) Zweidraht-Vierdrahtumsetzung
3.) Überwachung des Schleifenzustandes
4.) Anschaltung des Ruf-Generators (5)
5.) Anschaltung des Gebührenimpuls-Generators (6)
6.) Regelung der Empfangs- und Sendeverstärkung

Der SLIC-Baustein ist ein Bestandteil der Ergänzungsschaltung. Er vereint in kommender Richtung den aus dem Demultiplexer DEM ausgekoppelten und im PCM-Codec (2) und Filter analog gewandelten digitalen Sprachkanal mit dem aus dem DEM gekoppelten und in der Steuerung ST bearbeiteten digitalen Signalisierungskanal zu einem der herkömmlichen analogen a,b-Schnittstelle entsprechendem Signalgemisch. Umgekehrt trennt er die gehenden Signale der a,b-Schnittstelle in Sprache und Signalisierung. Die Sprache wird über Filter und PCM-Codec (2) digital gewandelt und mit der in der Steuerung ST bearbeiteten Signalisierung im Multiplexer MUX zu einem Rahmen zusammengefügt und über das Line Interface LI digital an die Vermittlungsstelle gesendet.

Die Vorgänge beim Verbindungsaufbau- und -abbau sowie im Gesprächszustand sollen kurz anhand von Fig. 3 erläutert werden:

1.) Der Multiplexer/Demultiplexer MUX/DEM sorgt in abgehender bzw. ankommender Richtung für das Zusammenfügen bzw. Trennen von digitalen Sprach- und Signalisierungskanal.

2.) Auf der Analogseite hat der SLIC-Baustein 4 eine ähnliche Aufgabe, indem er die analogen Sprachsignale, Signalisierungszustände und Systeminformationen in Zusammenarbeit mit der Steuerung auf die a,b-Schnittstelle 3 umsetzt.

3.) Hörtöne- und MFV (Mehrfrequenz-Verfahren)-Wählsignale werden im Sprachband gesendet und durchlaufen daher den gleichen Übertragungsweg wie die Sprachsignale über den PCM—CODEC 2, in dem zusätzlich ein D/A-Wandler vorgesehen ist.

4.) Alle anderen Signalisierungszustände werden auf der Analogseite mit Hilfe des SLIC-Bausteins 4, auf der Digitalseite mit Hilfe des Multiplexer/Demultiplexer MUX/DEM ein- bzw. ausgekoppelt, in der Steuerung ST bearbeitet und auf der Teilnehmer-Anschlußleitung TlnAsl digital codiert übertragen.

5.) Der SLIC-Baustein 4, der für die Speisung der nachgeschalteten Baugruppen sorgt, erkennt aufgrund seiner Schleifenüberwachung den Schleifenzustand, ob z. B. der Gabelumschalter GU in der Apparateschaltung APS betätigt wird, und meldet dies der Steuerung ST. Auf diese Weise wird auch die IWV (Impulswahl-Verfahren)-Wahl z. B. einer ZPr erfaßt und mit Hilfe der Steuerung ST in den Signalisierungs-Kanal eingespeist.

6.) Ankommende Systeminformationen (Ruf-, Gebührenimpulse) werden über die Steuerung ST aktiviert, in den zugehörigen Generatoren 5 bzw. 6 erzeugt und über den SLIC-Baustein 4 eingespeist.

7.) An den gekennzeichneten Anschlüssen können die o. a. analogen Zusatzeinrichtungen ZPr A, B, C angeschaltet werden, sie sind in den Signalfluß voll integriert.

Ein zweiter Anwendungsfall dieser Überlegungen besteht in der Möglichkeit, einen digitalen Fernsprechapparat aufzubauen aus einem kompletten konventionellen analogen FeAp (vgl. Fig. 1) und einer Zusatzschaltung entsprechend Fig. 3 ohne die Baugruppen AO, APS und SPH—SYS. Ebenso entfällt die Baugruppe TA aus Fig. 3, da sie im Tastenwahlblock (Fig. 1) bereits enthalten ist. Die Leistungsmerkmale sind im wesentlichen in der TWB—ST realisiert.

Die Steuerung ST in der Zusatzschaltung (Fig. 3) dient in diesem Fall hauptsächlich zur Abwicklung des digitalen Fernsprechverkehrs. Die Anschlußmöglichkeiten für konventionelle analoge Zusatzeinrichtungen sind bei dieser Konfiguration durch die im Analogteil vorhandenen und bezeichneten Schnittstellen, die allerdings herausgeführt werden müssen, voll gewährleistet.

Allerdings ist dann die Anzeige der gewählten Rufnummer im Display nur schrittweise mit der Abarbeitung derselben möglich, solange die Prozessoren von Tastenwahlblock-Steuerung TWB—ST und Steuerung ST nicht direkt miteinander kommunizieren. Dies gilt natürlich auch, wenn im Fall der Kurzwahl der angewählte Speicherinhalt im Display D angezeigt werden soll.

Für den Fall, daß der analoge Fernsprechapparat FeAp nicht mit IWV, sondern mit MFV arbeitet, müssen noch weitere Verkehrungen für eine digitale Wahlumsetzung der MFV-Signale getroffen werden. Auch diese Umsetzung kann in den SLIC-Baustein 4 integriert werden.

**Patentansprüche**

1. Digitales Fernsprechendgerät, insbesondere Fernsprechappart, mit
— einer digitalen Schnittstelle (1) für den Anschluß an ein digitales Fernsprechnetz,
— einer weiteren Schnitstelle (3) für den Anschluß von Zusatzgeräten (ZPrA, ZPrB, ZPrC) und
— einer digitalen Steuerung (ST) mit einem angeschlossenen Tonrufgenerator (5),
dadurch gekennzeichnet,
daß die weitere Schnittstelle (3) für den Anschluß von analogen Zusatzgeräten (ZPrA, ZPrB, ZPrC) als analoge a,b-Schnittstelle ausgebildet ist,
daß an diese analoge Schnittstelle (3) ein Interface-Baustein (4) als Verbindung zum Tonrufgenerator (5), zur Steuering (ST), und zu einem Gebührenimpulsgenerator (6) zum Erzeugen von analogen Rufsignalen bzw. von Gebührenimpulsen angeschlossen ist und
daß der Interface-Baustein (4) über einen PCM—CODEC (2) mit der digitalen Schnittstelle (1) verbunden ist, wobei der Interface-Baustein (4) die Speisung der Sprechschaltung, die Zweidraht/Vierdraht-Umsetzung, die Überwachung des Schleifenzustandes, die Anschaltung des Tonrufgenerators, die Anschaltung des Gebührenimpulsgenerators und die Regelung der Empfangs- und Sendeverstärkung übernimmt.

2. Gerät nach Anspruch 1, dadurch gekennzeichnet, daß an die analoge Schnittstelle (3) auch eine analoge Wähltastatur angeschlossen ist.

**Revendications**

1. Terminal téléphonique numérique, et notamment appareil téléphonique comprenant:
— une interface numérique (1) pour le raccordement à un réseau téléphonique numérique,
— une autre interface (3) pour le raccordement d'appareils additionnels (ZPrA, ZPrB, ZPrC) et
— une commande numérique (ST) avec un générateur de tonalité d'appel (5) raccordé,
ledit terminal étant caractérisé en ce que:
— la seconde interface (3) pour le raccordement d'appareils additionnels analogiques (ZPrA, ZPrB, ZPrC) est réalisée sous forme d'une interface a,b analogique;
— une carte d'interface (4) est raccordée à cette interface analogique (3) pour constituer la liaison avec le générateur de tonalité d'appel (5), la commande (ST) et un générateur d'impulsions de taxation (6) pour la génération de signaux d'appel analogiques ou d'impulsions de taxation; et

— la carte d'interface (4) est reliée par un CODEC MIC (2) à l'interface numérique (1) et assure l'alimentation du circuit de conversation, la transposition 2/4 fils, la surveillance de l'état de la boucle, le branchement du générateur de tonalité d'appel, le branchement du générateur d'impulsions de taxation et la régulation du gain de réception et d'émission.

2. Terminal selon revendication 1, caractérisé en ce qu'un clavier de numérotation analogique est également relié à l'interface analogique (3).

## Claims

1. A digital telephone terminal, especially a telephone, comprising

— a digital interface (1) for connection to a digital telephone network,

— a further interface (3) for the connection of ancillary equipment (ZPrA, ZPrB, ZPrC), and

— a digital controller (ST) including a tone generator (5),

charactersed in that the further interface (3) for connection of analog ancillary equipment (ZPrA, ZPrB, ZPrC) is designed as an analog a,b-interface,

that to this analog interface (3) an interface module (4) is connected to provide a connection to the tone generator (5), to the controller (ST), and to a call charge pulse generator (6) for generating analog call signals or call charge pulses, respectively, and

that the interface module (4) is connected to the digital interface (1) through a PCM—CODEC (2), wherein the interface module (4) performs feeding of the voice circuit, two-wire/four-wire conversion, monitoring of the loop condition, connection of the cell charge pulse generator, and control of the receiving and transmitting amplification.

2. An apparatus as claimed in claim 1, characterised in that an analog pushbutton set is also connected to the analog interface (3).

Fig.1

1

AO

SPH-
SYS

F

PCM-
CODEC

MUX/
DEM

LI

Teilnehmerleitung
zum Netz

GU

D

ST

TA

Fig.2

0 096 409

Fig.3